(19) Europäisches Patentamt
European Patent Office
Office européen des brevets

(11) EP 0 714 604 A1

(12) EUROPEAN PATENT APPLICATION

(43) Date of publication:
**05.06.1996 Bulletin 1996/23**

(51) Int. Cl.[6]: **A01N 43/90**
// (A01N43/90, 55:10, 31:14)

(21) Application number: **95118959.6**

(22) Date of filing: **01.12.1995**

(84) Designated Contracting States:
**DE ES FR GB GR IT**

(30) Priority: **01.12.1994 JP 298407/94**

(71) Applicant: **MITSUI TOATSU CHEMICALS, INCORPORATED**
**Tokyo (JP)**

(72) Inventors:
- **Yamada, Eiichi**
  **Mobara-shi, Chiba-ken (JP)**
- **Udagawa, Takatoshi**
  **Mobara-shi, Chiba-ken (JP)**
- **Shiraishi, Shirou**
  **Chiba-shi, Chiba-ken (JP)**

(74) Representative: **Zumstein, Fritz, Dr. et al**
**Zumstein & Klingseisen**
**Patentanwälte**
**Bräuhausstrasse 4**
**D-80331 München (DE)**

(54) **A composition having insecticidal and acaricidal properties**

(57) An insecticidal and acaricidal composition comprising, as active ingredients, at least one compound of the general formula (1)

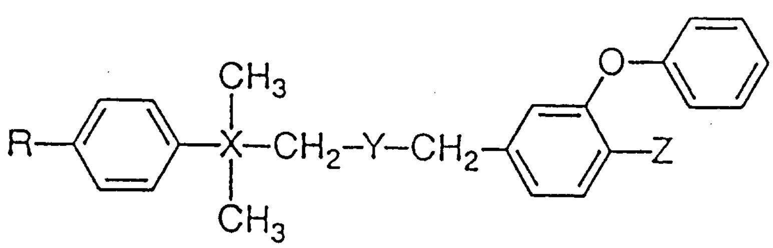

(1)

where R is a bromodifluoromethoxy or ethoxy group, X is a carbon or silicon atom, Y is an oxygen atom or $CH_2$, and Z is a hydrogen or fluorine atom, and at least one macrolide compound selected from the group consisting of a compound of the general formula (2)

EP 0 714 604 A1

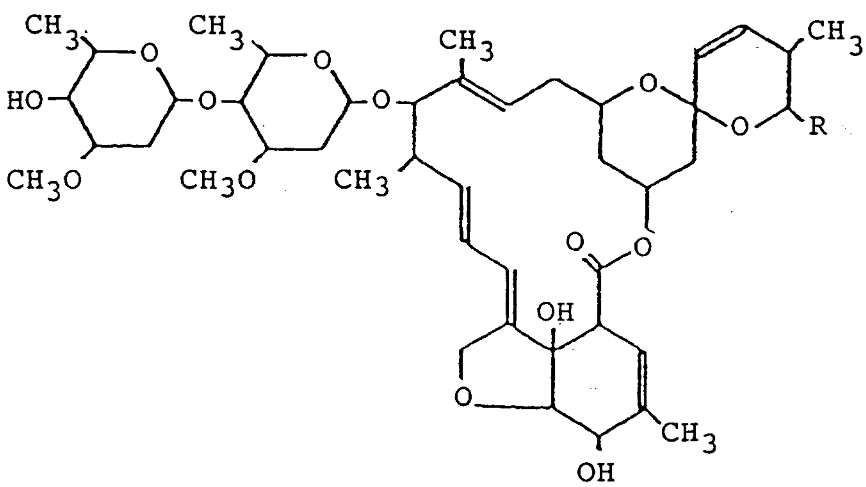

(2)

where R is sec-$C_4H_9$ or an isopropyl group, and a compound of the general formula (3)

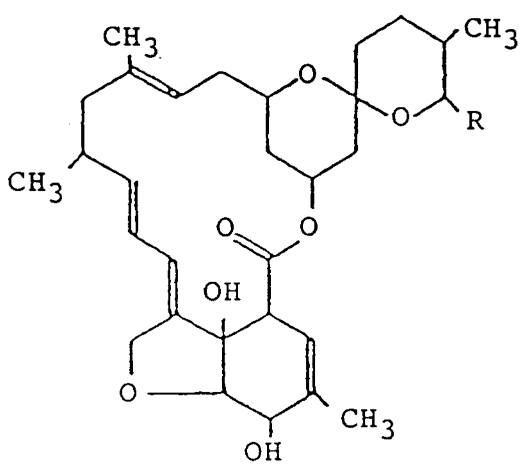

(3)

where R is a methyl or ethyl group. As a result of the combined use of both active ingredients, this composition has a much more powerful synergistic controlling effect on insects and mites, as compared with the cases in which each active ingredient is used alone.

## Description

BACKGROUND OF THE INVENTION

(i) Field of the Invention

This invention relates to insecticidal and acaricidal compositions comprising, as active ingredients, at least one compound of the general formula (1)

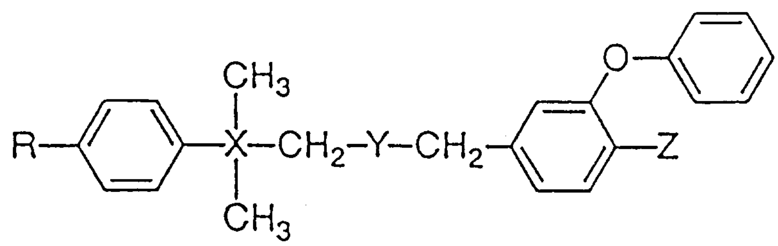

(1)

where R is a bromodifluoromethoxy or ethoxy group, X is a carbon or silicon atom, Y is an oxygen atom or $CH_2$, and Z is a hydrogen or fluorine atom, and at least one macloride compound.

(ii) Prior Art

It is described in Japanese Patent Laid-Open Nos. 45233/'88, 32840/'83, 201737/'83 and 106032/'87 that compounds of the general formula (1) exhibit a high insecticidal and acaricidal potency and have a wide pesticidal spectrum.

On the other hand, it is known that avermectins and milbemectins which are macrolide compounds have an insecticidal and acaricidal effect, as described in Japanese Patent Laid-Open Nos. 29742/'75, 32481/'81, 77686/'82 and 120589/'82; J. Antibiotics, 29, 14 and ibid., 29, 35; and Abstr. 150, Progr. Abstr. 53rd annu. Meet. Am. Soc. Parasitol. 76.

These avermectins are a group of macrocyclic lactones and are known to be highly effective in controlling a wide variety of diseases and pests affecting animals and plants. They have a parasiticidal activity against ectoparasites and endoparasites of man and animals used for food or as pets, and are also effective in controlling arthropods (including mites and insects) which cause damage to the overground or underground parts of stored or growing plants.

Conventionally, a wide variety of pesticides such as chlorinated organic compounds, organophosphorus compounds, carbamates and pyrethroids have been used to protect plants and cereals, or man and livestock, from noxious arthropods. However, these pesticides are not entirely satisfactory from the viewpoint of both potency characteristics (such as pesticidal effect, pesticidal spectrum and aftereffect) and safety characteristics (such as toxicity to crops and useful insects, toxicity to aquatic animals and warm-blooded animals, and environmental pollution by residual pesticides).

Moreover, it frequently happens that repeated application of these pesticides cause various noxious arthropods to develop resistance thereto. As a result, these pesticides show a reduction in effectiveness or become practically ineffective at usually used concentrations, thus making it difficult to achieve pest control.

Accordingly, it would be desirable to provide a pesticide which is improved in potency and safety characteristic and is also effective against noxious arthropods having developed resistance.

Compounds of the general formula (1) are practically effective against all developmental stages of noxious arthropods. For spider mites, however, they are highly effective in killing adults and larvae, but somewhat inferior in ovicidal properties. Moreover, when they are sprayed alone over plants in the field, they may decompose on the plant bodies and lose their potency.

Consequently, when compounds of the general formula (1) are used to control spider mites, they can sharply reduce the population density of spider mites immediately after application, but cannot be expected to suppress their population density for a long period of time. That is, if it is desired to use compounds of the general formula (1) so that eggs deposited by adult mites surviving after application or larvae hatching from these eggs may be killed by their aftereffect, they must be applied at higher concentrations and this is undesirable from an economic point of view.

On the other hand, macrolide compounds are not always effective against all developmental stages of various types of noxious arthropods. Specifically, avermectins are highly effective in killing adults and larvae, but generally inferior in ovicidal properties for all types of spider mites. Milbemectins are effective against all developmental stages of the citrus red mite, but somewhat inferior in ovicidal properties for the twospotted spider mite. Moreover, when these macrolide compounds are sprayed alone over plants in the field, they decompose easily on the plant bodies and lose their potency.

Consequently, these macrolide compounds can sharply reduce the population density of spider mites immediately after application, but have the disadvantage that larvae hatching from eggs survive, which causes a quick recovery of the population density of mites. Even for the twospotted spider mite, not only avermectins but also milbemectins permit a rapid recovery of its population density, unless they are uniformly sprayed so as to come into direct contact with all mites. Thus, they cannot be expected to suppress its population density for a long period of time.

SUMMARY OF THE INVENTION

As a result of extensive investigations, the present inventors have found that, if a compound of the general formula (1) is used in combination with at least one macrolide compound selected from compounds of the general formulas (2) and (3) which will be given below, an unexpectedly high degree of synergism and a long-lasting aftereffect are exhibited with respect to the long-term suppression of the population density of mites or the suppression of the population density of noxious arthropods, and that the pesticidal spectrum is extended to achieve an enhanced pesticidal effect. The present invention has been completed on the basis of this finding.

According to the present invention, there is provided an insecticidal and acaricidal composition comprising, as active ingredients, at least one compound of the general formula (1)

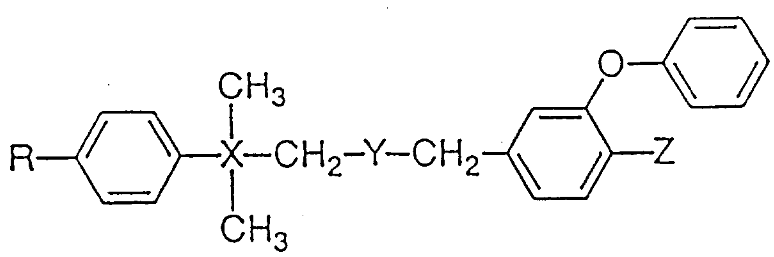

(1)

where R is a bromodifluoromethoxy or ethoxy group, X is a carbon or silicon atom, Y is an oxygen atom or $CH_2$, and Z is a hydrogen or fluorine atom, and at least one macrolide compound selected from the group consisting of a compound of the general formula (2)

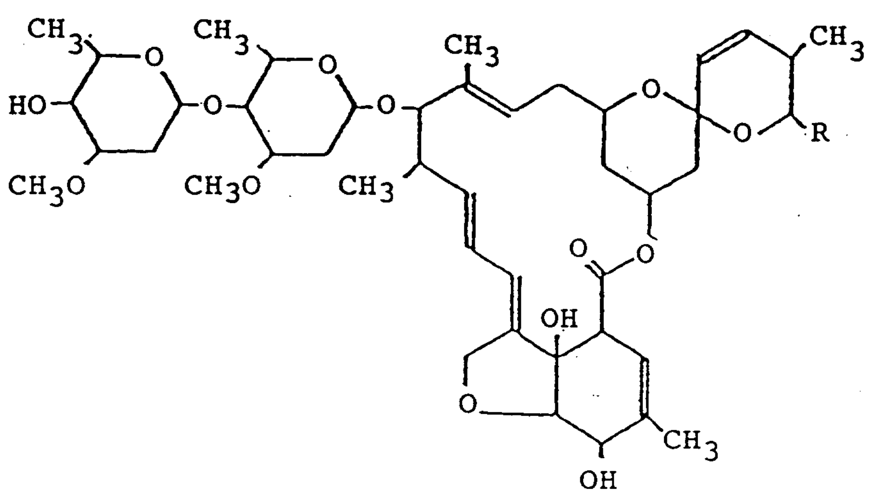

(2)

where R is sec-$C_4H_9$ or an isopropyl group, and a compound of the general formula (3)

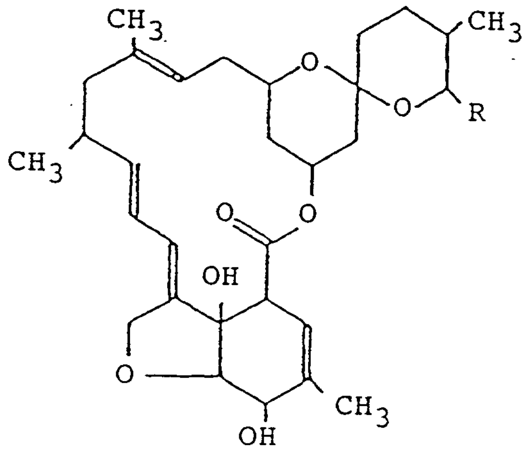

(3)

where R is a methyl or ethyl group.

DETAILED DESCRIPTION OF THE PREFERRED EMBODIMENTS

Preferred compounds of the general formula (1) which can be used in combination with at least one macrolide compound according to the present invention are given in Table 1 below.

Table 1

| Compound No. | R | X | Y | Z |
|---|---|---|---|---|
| 1 | $BrF_2CO$ | C | O | H |
| 2 | $C_2H_5O$ | C | O | H |
| 3 | $C_2H_5O$ | C | $CH_2$ | H |
| 4 | $C_2H_5O$ | C | $CH_2$ | F |
| 5 | $C_2H_5O$ | Si | $CH_2$ | F |

On the other hand, the macrolide compounds which can be used in the compositions of the present invention include avermectins represented by the general formula (2) and milbemectins represented by the general formula (3).

The compositions of the present invention have a much broader pesticidal spectrum and, moreover, exhibit a synergistic enhancement in pesticidal effect and duration of action. More specifically, the compositions of the present invention are highly effective in controlling a wide variety of agricultural, horticultural and forestal pests which may cause damage to paddy rice, dry field crops, cotton, fruit trees, forests and the like. Such pests include, for example, lepidoptera such as the rice stem borer (Chilo suppressalis), the rice leafroller (Cnaphalocrocis medinalis), the green rice caterpillar (Naranga aenescens), the oriental corn borer (Ostrinia furnacalis), the common cabbageworm (Pieris rapae crucivora), the diamondback moth (Plutella xylostella), the cabbage armyworm (Mamestra brassicae), the common cutworm (Spodoptera litura), the armyworm (Pseudaletia separata), the smaller tea tortrix (Adoxophyes sp.), the apple leaf miner (Phyllonorycter ringoniella), Lyonetia prunifoliella malinella, the peach fruit moth (Carposina niponensis), the oriental fruit moth (Grapholita molesta), the citrus leafminer (Phyllocnistis citrella), the rice skipper (Parnara guttata), the gypsy moth (Lymantria dispar japonica), the fall webworm (Hyphantrina cunea), Ephestina sp., the cutworm (Agrotis segetum), the codling moth (Cryptophlebia leucotreta) and the black cutworm (Agrotis ipsilon); hemiptera such as the green rice leafhopper (Nephotettix cincticeps), the small brown planthopper (Laodelphax striatellus), the white-backed rice planthopper (Sogatella furcifera), the brown rice planthopper (Nilaparvata lugens), the tea green leafhopper (Empoasca onukii), the greenhouse whitefly (Trialeurodes vaporariorum), the sweetpotato whitefly (Bemisia tabaci), the arrowhead scale (Unaspis yanonensis), the cottonycushion scale (Icerya purchasi), the Comstock mealybug (Pseudococcus comstocki), the San Jose scale (Comstockaspis perniciosa), the green peach aphid (Myzus persicae), the cotton aphid (Aphis gossypii), the cabbage aphid (Brevicoryne brassicae), the turnip aphid (Lipaphis erysimi), the spiraea aphid (Aphis citricola), the foxglove aphid (Aulacorthum solani), the wooly apple aphid (Eriosoma lanigerum), the brown citrus aphid (Toxoptera citricidus), the black citrus aphid (Toxoptera aurantii), the bean bug (Riptortus clavatus), the southern green stink bug (Nezara viridula), the common green stink bug (Nezara antennata), Plautia stali, the rice bug (Leptocorisa chinensis), the citrus spiny whitefly (Aleurocanthus spineferus) and the Japanese pear lace bug (Stephanitis nashi); coleoptera such as the adzuki bean weevil (Callosobruchus chinesis), the rice weevil (Sitophilus oryzae), the rust red flour beetle (Tribolium castaneum), the twenty-eight-spotted ladybird (Henosepilachna vigintioctopunctata), sugarcane wireworms (Melanotus spp.), the Japanese beetle (Popillia japonica), the cupreous chafer (Anomala cuprea), the soybean beetle (Anomala rufocuprea), the Japanese pine sawer (Monochamus alternatus), the rice water weevil (Lissorhoptrus oryzophilus), the rice leaf beetle (Oulema oryzae), the powder post beetle (Lyctus brunneus), the striped flea beetle (Phyllotreta striolata), the two-striped leaf beetle (Paraluperodes nigrobilineatus), the cucurbit leaf beetle (Aulacophora femoralis), Paederus fuscipes, the cigarette beetle (Lasioderma serricorne) and the varied carpet beetle (Anthrenus verbasci); orthoptera such as the common migratory locust (Locusta migratoria), the rice grasshopper (Oxya yezoensis), the German cockroach (Blattella germanica) and the American cockroach (Periplaneta americana); diptera such as the housefly (Musca domestica), the rice stem maggot (Chlorops oryzae), the rice small leafminer (Hydrellia griseola), gall midges, the onion maggot (Hylemya antique), the oriental fruit fly (Dacus dorsalis), the melon fly (Dacus cucurbitae), the rice crane fly (Tipula aino), the biting midges (Chironomus plumosus), the common house mosquito (Culex pipiens pallens) and the one-striped mosquito (Aedes albopictus); thysanoptera such as the rice thrips (Baliothrips biformis), the onion thrips (Thrips tabaci), Thrips palmi, the yellow tea thrips (Scirtothrips dorsalis), Ponticulothrips diospyrosi and Frankliniella occidentalis; mites such as the twospotted spider mite (Tetranychus urticae), the Kanzawa spider mite (Tetranychus kanzawai), the citrus red mite (Panonychus citri), the European red mite (Panonychus ulmi), the Hawthorn spider mite (Tetranychus viennensis), Panonychus mori, the pink citrus rust mite (Aculops pelekassi), the broad mite (Polyphagotarsonemus latus) and Acaphylla theavagrans; and other noxious insects of the orders Homoptera and Hymenoptera.

The compositions of the present invention are also highly effective in destroying endoparasites which live in man and animals. Such endoparasites include, for example, human endoparasites such as protozoans (e.g., flagellates, sporozoans and ciliates) and helminths (e.g., nematodes, thorn-headed worms, trematodes and tapeworms); and animal endoparasites such as nematodes (e.g., Ascaris lumbricoides, Toxocara canis, Parascaris equorum, Ascaridia galli, Enterobius vermicularis, Trichinella spiralis, Strongylus spp., and Onchocerca spp.), tapeworms (e.g., Anoplocephala spp., Dipylidium caninum and hydatids), trematodes (e.g., schistosomes and amphistomes) and other endoparasites.

Moreover, the compositions of the present invention also have a marked insecticidal and acaricidal effect on pests which have already developed resistance to pyrethroid insecticides and macrolide compounds.

In actually applying various combinations of active compounds in accordance with the present invention, bulk mixtures may be applied as such, or they may be applied after being made into any desired formulations, such as emulsions, wettable powders, dusts, granules, flowable fluids, fumigants, baits, aerosols, microcapsules or oils, by using single active compounds and other adjuvants as required.

Suitable carriers which can be used to make the compositions of the present invention into desired formulations include solid carriers, for example, inorganic materials such as clay, talc, bentonite, kaolin, mica, pumice, vermiculite, gypsum, calcium carbonate, diatomaceous earth, zeolite and silicic anhydride; organic materials of vegetable origin such as soybean meal and flour; natural and synthetic polymeric compounds such as starch, crystalline cellulose and polyvinyl chloride; and urea and ammonium sulfate; liquid carriers, for example, aromatic hydrocarbons such as toluene, xylene, cumene and methylnaphthalene; chlorinated hydrocarbons such as carbon tetrachloride, chloroform, monochlorobenzene and o-chlorotoluene; ethers such as dioxane, tetrahydrofuran and ethyl cellosolve; ketones such as acetone, methyl ethyl ketone, cyclohexanone, isophorone and acetophenone; esters such as ethyl acetate, amyl acetate and ethylene glycol acetate; alcohols such as ethanol, ethylene glycol and cyclohexanol; ether alcohols such as ethylene glycol ethyl ether and diethylene glycol ethyl ether; polar solvents such as dimethylformamide and dimethyl sulfoxide; and water; and gaseous carriers such as butane, propane, nitrogen and carbon dioxide.

Adjuvants which are used for purposes of emulsification, dispersion, wetting, extension, adhesion, flowability improvement, active ingredient stabilization and the like include, for example, anionic surface-active agents such as alkylebenzenesulfonates, alkylsulfates and ligninsulfonates; nonionic and cationic surface-active agents such as polyoxyalkylene alkyl ethers, polyoxyalkylene alkylaryl ethers, polyoxyalkylene alkylamines, polyoxyalkylene alkylamides, polyoxyalkylene alkyl thioethers, polyoxyalkylene fatty acid esters, glycerol fatty acid esters, sorbitan fatty acid esters and polyoxypropylene polyoxyethylene block polymers; and other adjuvants such as calcium stearate, wax, methyl cellulose, carboxymethyl cellulose, polyvinyl alcohol, casein, gum arabic, isopropyl hydrogen phosphate, phenol derivatives (e.g., 2,2-di-t- butyl-4-methylphenol and butylhydroxyanisole), bisphenol derivatives, arylamines (e.g., phenyl-$\alpha$-naphthylamine and the condensation product of phenetidine and acetone) and benzophenone compounds. However, it is a matter of course that these ingredients are not limited to the above-enumerated compounds.

In preparing the compositions of the present invention, there may be used a combination of a compound of the general formula (1) and a macrolide compound of the general formula (2), a combination of a compound of the general formula (1) and a macrolide compound of the general formula (3), or a combination of a compound of the general formula (1) and macrolide compounds of the general formulas (2) and (3).

In each of the above-described combinations, the compound of the general formula (1), the macrolide compound of the general formula (2), and the macrolide compound of the general formula (3) may be either single compounds or mixtures.

Where the macrolide compound of the general formula (2) is a mixture of a compound of the general formula (2) in which R is sec-$C_4H_9$ (Compound a) and a compound of the general formula (2) in which R is an isopropyl group (Compound b), it is preferable that the mixture comprises 80% or more of Compound a and 20% or less of Compound b.

Where the macrolide compound of the general formula (3) is a mixture of a compound of the general formula (3) in which R is a methyl group (Compound $\alpha$) and a compound of the general formula (3) in which R is an ethyl group (Compound $\beta$), it is preferable that the mixture comprises 30% of Compound $\alpha$ and 70% of Compound $\beta$.

The compound of the general formula (1) and the macrolide compound are preferably mixed in such a proportion that 0.1 to 100 parts by weight, more preferably 1 to 100 parts by weight, of the macrolide compound is present per 100 parts by weight of the compound of the general formula (1).

When the compositions of the present invention are made into various formulations, the concentration of the active ingredients is preferably in the range of 2 to 60% by weight for emulsions, 0.3 to 5% by weight for dusts, 2 to 60% by weight for wettable powders, and 0.3 to 5% by weight for granules.

Although the compositions of the present invention comprises, as active ingredients, a compound of the general formula (1) and a macrolide compound of the general formula (2) and/or a macrolide compound of the general formula (3), they may further contain additional ingredients such as other insecticides, acaricides, bactericides and fertilizers, provided that the effects of the present invention are produced.

In order to demonstrate the excellent effects of the compositions of the present invention, several formulation examples and application examples are given below. However, it is to be understood that the contents of active ingredients, the types and contents of adjuvants, and the pests to be controlled are not limited thereby.

The numbers of the compounds of the general formula (1) which will be given in the following tables are as defined in Table 1. Control formulations used for purposes of comparison [i.e., formulations containing only a compound of the general formula (1) and formulations containing only a macrolide compound of the general formula (2) and/or a macrolide compound of the general formula (3)] were the same as test formulations in accordance with the present invention, except that the other active ingredient was replaced by the main diluent. As Compound No.1 in Table 1, a bulk material synthesized by the present inventors and 10% Anniverse Emulsion (manufactured by Mitsui Toatsu Chemicals, Inc.) were used. As Compound No.2 in Table 1, a bulk material synthesized by the present inventors and 20% Trebon Emulsion (manufactured by Mitsui Toatsu Chemicals, Inc.) were used. As Compound Nos.3 and 4 in Table 1, bulk materials synthesized by the present inventors were used in the form of a 10% emulsion prepared by homogeneously mixing and dissolving 10 parts of each bulk material, 20 parts of Sorpol 355F (trade name; manufactured by Toho Chemical Industry Co., Ltd.) and 70 parts of xylene. As Compound No.5 in Table 1, Shironen Emulsion (trade name; manufactured by Dainippon Jochugiku Co., Ltd.) was used.

As macrolide compounds of the general formula (2), 0.6% Avermectin Emulsion (manufactured by Kyung Nong Corporation Ltd., Republic of Korea) and each single compound (Compound a or b) obtained by extracting therefrom a mixture of macrolide compounds of the general formula (2) with an organic solvent and separating and purifying its each component according to such techniques as column chromatography were used.

As macrolide compounds of the general formula (3), 1% Milbenock Emulsion (manufactured by Sankyo Co., Ltd.) and each single compound (Compound $\alpha$ or $\beta$) obtained by extracting therefrom a mixture of macrolide compounds of the general formula (3) with an organic solvent and separating and purifying its each component according to such techniques as column chromatography were used.

Example 1

0.3 part of Compound No.1, 0.03 part of a macrolide compound (Compound a), 20 parts of diatomaceous earth, 30 parts of clay, and 49.67 parts of talc are finely ground and homogeneously mixed to obtain 100 parts of a dust.

Example 2

5 or 10 parts of Compound No.1, 1 part of a macrolide compound (Compound b), 76 or 81 parts of diatomaceous earth, 10 parts of white carbon, 1 part of sodium ligninsulfonate, and 2 parts of sodiumalkylbenzene sulfonate are finely ground and homogeneously mixed to obtain 100 parts of a wettable powder.

Example 3

5 or 10 parts of Compound No.1, 1 part of a macrolide compound (an 80:20 mixture of Compound a and Compound b), 20 parts of Sorpol 355F (trade name; manufactured by Toho Chemical Industry Co., Ltd.), and 69 or 74 parts of xylene are homogeneously mixed and dissolved to obtain 100 parts of an emulsion.

Example 4

1 part of Compound No.1, 0.1 part of a macrolide compound (Compound α), 20 parts of talc, 77.9 parts of bentonite, and 1 part of sodium ligninsulfonate are homogeneously mixed. After the addition of water, this mixture is granulated and dried to obtain 100 parts of granules.

Example 5

1 part of Compound No.1, 0.1 part of a macrolide compound (Compound β), 5 parts of sugar, 50 parts of wheat bran, 20 parts of rice bran, and 23.9 parts of flour are homogeneously mixed. After the addition of water, this mixture is granulated and dried to obtain 100 parts of a bait.

Example 6

10 parts of Compound No.1, 1 part of a macrolide compound (a 30:70 mixture of Compound α and Compound β), 15 parts of di-n-decyl phthalate, 10 parts of vinyl alcohol/vinyl acetate/itaconic acid copolymer sodium salt, and 40 parts of distilled water were mixed and emulsified. The resulting emulsion is homogeneously mixed with 4.8 parts of sodium polystyrene sulfonate, 8 parts of polyacrylic acid, and 11.2 parts of distilled water to obtain 100 parts of a flowable fluid.

Example 7

5 parts of Compound No.1, 0.5 part of a macrolide compound (comprising equal amounts of an 80:20 mixture of Compound a and Compound b and a 30:70 mixture of Compound α and Compound β), 21.6 parts of di-n-decyl phthalate, 0.2 part of methylolmelamine, 6.8 parts of acrylic acid/acrylonitrile/2-acrylamido-2-methylpropanesulfonic acid copolymer, and 50 parts of distilled water are mixed, subjected to pH adjustment, emulsified and then polymerized. The resulting product is homogeneously mixed with 0.1 part of xanthan gum, 0.1 part of guar gum, and 15.6 parts of distilled water to obtain 100 parts of microcapsules.

Example 8

5 or 10 parts of Compound No.2, 1 part of a macrolide compound (an 80:20 mixture of Compound a and Compound b), 20 parts of Sorpol 355F (trade name; manufactured by Toho Chemical Industry Co., Ltd.), and 69 or 74 parts of xylene are homogeneously mixed and dissolved to obtain 100 parts of an emulsion.

Example 9

5 or 10 parts of Compound No.3, 1 part of a macrolide compound (an 80:20 mixture of Compound a and Compound b), 20 parts of Sorpol 355F (trade name; manufactured by Toho Chemical Industry Co., Ltd.), and 69 or 74 parts of xylene are homogeneously mixed and dissolved to obtain 100 parts of an emulsion.

Example 10

5 or 10 parts of Compound No.4, 1 part of a macrolide compound (an 80:20 mixture of Compound a and Compound b), 20 parts of Sorpol 355F (trade name; manufactured by Toho Chemical Industry Co., Ltd.), and 69 or 74 parts of xylene are homogeneously mixed and dissolved to obtain 100 parts of an emulsion.

Example 11

5 or 10 parts of Compound No.5, 1 part of a macrolide compound (an 80:20 mixture of Compound a and Compound b), 20 parts of Sorpol 355F (trade name; manufactured by Toho Chemical Industry Co., Ltd.), and 69 or 74 parts of xylene are homogeneously mixed and dissolved to obtain 100 parts of an emulsion.

Example 12

5 or 10 parts of Compound No.1, 1 part of a macrolide compound (a 30:70 mixture of Compound α and Compound β), 20 parts of Sorpol 355F (trade name; manufactured by Toho Chemical Industry Co., Ltd.), and 69 or 74 parts of xylene are homogeneously mixed and dissolved to obtain 100 parts of an emulsion.

Example 13

5 or 10 parts of Compound No.2, 1 part of a macrolide compound (a 30:70 mixture of Compound α and Compound β), 20 parts of Sorpol 355F (trade name; manufactured by Toho Chemical Industry Co., Ltd.), and 69 or 74 parts of xylene are homogeneously mixed and dissolved to obtain 100 parts of an emulsion.

Example 14

5 or 10 parts of Compound No.3, 1 part of a macrolide compound (a 30:70 mixture of Compound α and Compound β), 20 parts of Sorpol 355F (trade name; manufactured by Toho Chemical Industry Co., Ltd.), and 69 or 74 parts of xylene are homogeneously mixed and dissolved to obtain 100 parts of an emulsion.

Example 15

5 or 10 parts of Compound No.4, 1 part of a macrolide compound (a 30:70 mixture of Compound α and Compound β), 20 parts of Sorpol 355F (trade name; manufactured by Toho Chemical Industry Co., Ltd.), and 69 or 74 parts of xylene are homogeneously mixed and dissolved to obtain 100 parts of an emulsion.

Example 16

5 or 10 parts of Compound No.5, 1 part of a macrolide compound (a 30:70 mixture of Compound α and Compound β), 20 parts of Sorpol 355F (trade name; manufactured by Toho Chemical Industry Co., Ltd.), and 69 or 74 parts of xylene are homogeneously mixed and dissolved to obtain 100 parts of an emulsion.

Example 17

5 parts of Compound No.3, 5 parts of Compound No.4, 1 part of a macrolide compound (a 30:70 mixture of Compound α and Compound β), 15 parts of di-n-decyl phthalate, 10 parts of vinyl alcohol/vinyl acetate/itaconic acid copolymer sodium salt, and 40 parts of distilled water were mixed and emulsified. The resulting emulsion is homogeneously mixed with 4.8 parts of sodium polystyrene sulfonate, 8 parts of polyacrylic acid, and 11.2 parts of distilled water to obtain 100 parts of a flowable fluid.

Test 1 (Effect on a sensitive strain of the Kanzawa spider mite)

About 2 cm square sections of kidney bean leaves were placed on wetted absorbent cotton. Then, 7 female adults of the Kanzawa spider mite were inoculated on each leaf section and allowed to deposit eggs. After 24 hours, the adult mites were removed, 4 ml each of various dilutions of 10% Anniverse Emulsion (Compound No.1), 0.6% Avermectin Emulsion or a mixture thereof were sprayed by means of a tower sprayer, and the leaf sections were maintained in a thermostatic chamber kept at 25°C. Eleven days after the treatment, the numbers of surviving mites, dead mites, unhatched eggs and escaping mites were examined. Thus, the survival rates at various concentrations were calculated and the $LC_{50}$ value (in ppm) was determined therefrom.

In order to evaluate the synergistic effect of the compound of the general formula (1) and the macrolide compound, the combined toxicity index was calculated from the $LC_{50}$ values of the respective compounds according to the equation of Y.P. Sun et al. (J. Econ. Ent., 53(5), 887, 1960). If this combined toxicity index is greater than 100, it is revealed that both compounds exhibit synergism.

The equation of Y.P. Sun et al. for calculating the combined toxicity index is more fully explained below.

The actual toxicity index of a mixture M composed of agents A and B is obtained as follows:

$$\text{Actual toxicity index (A.T.I.)} = [(LC_{50}\text{ of agent A})/(LC_{50}\text{ of mixture M})] \times 100 \qquad (1)$$

$$\text{Theoretical toxicity index (T.T.I.)} = [(\text{Toxicity index of agent A}) \times (\text{Percentage of agent A in mixture M}) + (\text{Toxicity index of agent B}) \times (\text{Percentage of agent B in mixture M}) \qquad (2)$$

Then, the combined toxicity index can be calculated according to the following equation.

$$\text{Combined toxicity index} = \frac{\text{A.T.I. of mixture M [value of equation (1)]}}{\text{T.T.I. of mixture M [value of equation (2)]}} \times 100$$

The results thus obtained are shown in Table 2.

Table 2

| Compound | $LC_{50}$ value (ppm) | Combined toxicity index |
|---|---|---|
| Avermectin Emulsion | 0.69 | — |
| Compound No.1 | 1.13 | — |
| Avermectin Emulsion:Compound No.1 = 1:5 | 0.36 | 280 |

Test 2 (Effect on a resistant strain of the Kanzawa spider mite)

About 2 cm square sections of kidney bean leaves were placed on wetted absorbent cotton. Then, 7 female adults of the Kanzawa spider mite were inoculated on each leaf section and allowed to deposit eggs. After 24 hours, the adult mites were removed, 4 ml each of various dilutions of 10% Anniverse Emulsion (Compound No.1), 20% Trebon Emulsion (Compound No.2), 0.6% Avermectin Emulsion or a mixture thereof were sprayed by means of a tower sprayer, and the leaf sections were maintained in a thermostatic chamber kept at 25°C. Eleven days after the treatment, the numbers of surviving mites, dead mites, unhatched eggs and escaping mites were examined. Thus, the survival rates at various concentrations were calculated and the $LC_{50}$ value (in ppm) was determined therefrom.

In order to evaluate the synergistic effect of each compound of the general formula (1) and the macrolide compound, the combined toxicity index was calculated from the $LC_{50}$ values of the respective compounds in the same manner as in Test 1. The results thus obtained are shown in Table 3.

Table 3

| Compound | $LC_{50}$ value (ppm) | Combined toxicity index |
|---|---|---|
| Avermectin Emulsion | 0.55 | — |
| Compound No.1 | 11.5 | — |
| Compound No.2 | 162 | — |
| Avermectin Emulsion:Compound | | |
| No.1 = 1:5 | 1.22 | 218 |
| = 1:10 | 1.78 | 230 |
| = 1:20 | 3.92 | 150 |
| Avermectin Emulsion:Compound | | |
| No.2 = 1:5 | 1.85 | 175 |
| = 1:10 | 2.88 | 203 |

Test 3 (Effect on a resistant strain of the Kanzawa spider mite)

A test was carried out in the same manner as in Test 1, except that, in place of 0.6% Avermectin Emulsion, 1% Milbenock Emulsion was used as the macrolide compound. The results thus obtained are shown in Table 4.

Table 4

| Compound | $LC_{50}$ value (ppm) | Combined toxicity index |
|---|---|---|
| Milbenock Emulsion | 0.88 | — |
| Compound No.1 | 11.5 | — |
| Milbenock Emulsion:Compound | | |
| No.1 = 1:5 | 2.06 | 185 |

Test 4 (Effect on a resistant strain of the citrus red mite)

About 2 cm square sections of mandarin tree leaves were placed on wetted absorbent cotton. Then, 7 female adults of the citrus red mite were inoculated on each leaf section and allowed to deposit eggs. After 24 hours, the adult mites were removed, 4 ml each of various dilutions of 10% Anniverse Emulsion (Compound No.1), 0.6% Avermectin Emulsion or a mixture thereof were sprayed by means of a tower sprayer, and the leaf sections were maintained in a thermostatic chamber kept at 25°C. Eleven days after the treatment, the numbers of surviving mites, dead mites, unhatched eggs and escaping mites were examined. Thus, the survival rates at various concentrations were calculated and the $LC_{50}$ value (in ppm) was determined therefrom. The results thus obtained are shown in Table 5.

Table 5

| Compound | $LC_{50}$ value (ppm) | Combined toxicity index |
|---|---|---|
| Avermectin Emulsion | 4.20 | — |
| Compound No.1 | 2000 | — |
| Avermectin Emulsion:Compound | | |
| No.1 = 1:5 | 11.4 | 218 |

Test 5 (Effect on the Kanzawa spider mite living on a leguminous plant)

Potted kidney bean plants in the first true leaf stage were inoculated with female adults of the Kanzawa spider mite and allowed to stand in a greenhouse for about a week. After leaves infested with Kanzawa spider mites were marked, the kidney bean plants were sprayed with a diluted fluid of 10% Anniverse Emulsion (Compound No.1), a macrolide compound (i.e., 0.6% Avermectin Emulsion or 1% Milbenock Emulsion) or a mixture thereof to such an extent that the fluid dripped from their leaves. The number of Kanzawa spider mites living on the marked leaves was counted 2, 7, 12, 16 and 27 days after the treatment. The results thus obtained are shown in Tables 6 and 7.

Table 6

| Avermectin Emulsion (ppm) | Compound No.1 (ppm) | Days after treatment (Number of living mites) | | | | | |
|---|---|---|---|---|---|---|---|
| | | Before treatment | 2 days | 7 days | 12 days | 16 days | 27 days |
| 10 | — | 46 | 0 | 0 | 0 | 35 | 118 |
| — | 25 | 51 | 0 | 0 | 0 | 27 | 102 |
| 2.5 | 25 | 46 | 0 | 0 | 0 | 0 | 5 |

Table 7

| Milbenock Emulsion (ppm) | Compound No.1 (ppm) | Days after treatment (Number of living mites) | | | | | |
|---|---|---|---|---|---|---|---|
| | | Before treatment | 2 days | 7 days | 12 days | 16 days | 27 days |
| 10 | — | 66 | 0 | 1 | 5 | 25 | 89 |
| — | 25 | 51 | 0 | 0 | 0 | 27 | 102 |
| 2.5 | 25 | 75 | 0 | 0 | 0 | 0 | 1 |

Test 6 (Effect on a resistant strain of the greenhouse whitefly)

About 2 cm square sections of kidney bean leaves on which one-day-old eggs of the greenhouse whitefly had been deposited were placed on wetted absorbent cotton, sprayed with 4 ml each of various dilutions of 10% Anniverse Emulsion (Compound No.1), 0.6% Avermectin Emulsion or a mixture thereof by means of a tower sprayer, and maintained in a thermostatic chamber kept at 25°C. Twelve days after the treatment, the numbers of surviving insects, dead insects, unhatched eggs and escaping insects were examined. Thus, the survival rates at various concentrations were calculated and the $LC_{50}$ value (in ppm) was determined therefrom. The results thus obtained are shown in Table 8.

Table 8

| Compound | $LC_{50}$ value (ppm) | Combined toxicity index |
|---|---|---|
| Avermectin Emulsion | 1.65 | — |
| Compound No.1 emulsion | 630 | — |
| Avermectin Emulsion:Compound | | |
| No.1 emulsion = 1:5 | 5.74 | 170 |

Test 7 (Effect on the green peach aphid living on a solanaceous plant)

After leaves naturally infested with green peach aphids were marked, eggplants were sprayed with a diluted fluid of 10% Anniverse Emulsion (Compound No.1), 0.6% Avermectin Emulsion or a mixture thereof to such an extent that the fluid dripped from their leaves. The number of green peach aphids living on the marked leaves was counted 2, 7, 14, 21 and 28 days after the treatment, and the corrected population density index was calculated according to the equation given below. The results thus obtained are shown in Table 9.

$$\text{Corrected population density index} = \frac{\text{(Number of insects after treatment in treated division)/ (Number of insects before treatment in treated division)}}{\text{(Number insects after treatment in untreated division)/ (Number of insects before treatment in untreated division)}} \times 100$$

Table 9

| Avermectin Emulsion (ppm) | Compound No.1 (ppm) | Corrected population density index | | | | | |
|---|---|---|---|---|---|---|---|
| | | Days after treatment | | | | | |
| | | Before treatment | 2 days | 7 days | 14 days | 21 days | 28 days |
| 2.5 | — | 100 | 32.4 | 11.4 | 40.0 | 73.0 | 130 |
| — | 25 | 100 | 0 | 0.3 | 2.5 | 42.5 | 96.5 |
| 2.5 | 25 | 100 | 0.2 | 0.1 | 0.3 | 3.1 | 10.8 |

Test 8 (Effect on the diamondback moth)

Potted cabbages were sprayed with a diluted fluid of an emulsion of a compound of the general formula (1) [i.e., 10% Anniverse Emulsion (Compound No.1), 20% Trebon Emulsion (Compound No.2), an emulsion of Compound No.3, an emulsion of Compound No.4, or Shironen Emulsion (Compound No.5)], 0.6% Avermectin Emulsion or a mixture thereof to such an extent that the fluid dripped from their leaves. Subsequently, cabbage leaves were sampled at predetermined intervals and fed to second-instar larvae of the diamond-back moth. Then, the number of dead larvae was examined after 2 days from the feeding. The results thus obtained are shown in Tables 10, 11, 12, 13 and 14.

Table 10

| Avermectin Emulsion (ppm) | Compound No.1 (ppm) | Death rate (%) | | | | | |
|---|---|---|---|---|---|---|---|
| | | Days after treatment | | | | | |
| | | 2 days | 7 days | 14 days | 21 days | 28 days | 35 days |
| 5 | — | 100 | 90 | 80 | 65 | 30 | 0 |
| — | 25 | 90 | 10 | 0 | 0 | - | - |
| 2.5 | 25 | 100 | 100 | 100 | 100 | 100 | 100 |
| 5.0 | 25 | 100 | 100 | 100 | 100 | 100 | 100 |

Table 11

| Avermectin Emulsion (ppm) | Compound No.2 (ppm) | Death rate (%) | | | | | |
|---|---|---|---|---|---|---|---|
| | | Days after treatment | | | | | |
| | | 2 days | 7 days | 14 days | 21 days | 28 days | 35 days |
| 5 | — | 100 | 90 | 80 | 65 | 30 | 0 |
| — | 50 | 38 | 15 | 25 | 11 | - | - |
| 2.5 | 25 | 100 | 100 | 100 | 100 | 100 | 100 |

Table 12

| Avermectin Emulsion (ppm) | Compound No.3 (ppm) | Death rate (%) | | | | | |
|---|---|---|---|---|---|---|---|
| | | Days after treatment | | | | | |
| | | 2 days | 7 days | 14 days | 21 days | 28 days | 35 days |
| 5 | — | 100 | 90 | 80 | 65 | 30 | 0 |
| — | 50 | 70 | 45 | 15 | 40 | 35 | 5 |
| 2.5 | 25 | 100 | 100 | 100 | 100 | 100 | 100 |

Table 13

| Avermectin Emulsion (ppm) | Compound No.4 (ppm) | Death rate (%) | | | | | |
|---|---|---|---|---|---|---|---|
| | | Days after treatment | | | | | |
| | | 2 days | 7 days | 14 days | 21 days | 28 days | 35 days |
| 5 | — | 100 | 90 | 80 | 65 | 30 | 0 |
| — | 50 | 94 | 65 | 60 | 10 | 0 | 0 |
| 2.5 | 25 | 100 | 100 | 100 | 100 | 100 | 100 |

Table 14

| Avermectin Emulsion (ppm) | Compound No.5 (ppm) | Death rate (%) | | | | | |
|---|---|---|---|---|---|---|---|
| | | Days after treatment | | | | | |
| | | 2 days | 7 days | 14 days | 21 days | 28 days | 35 days |
| 5 | — | 100 | 90 | 80 | 65 | 30 | 0 |
| — | 50 | 95 | 73 | 50 | 15 | 0 | 0 |
| 2.5 | 25 | 100 | 100 | 100 | 100 | 100 | 100 |

Test 9 [Effect on a resistant strain (selected by Compound No.1) of the Kanzawa spider mite)

About 2 cm square sections of kidney bean leaves were placed on wetted absorbent cotton. Then, 7 female adults of the Kanzawa spider mite were inoculated on each leaf section and allowed to deposit eggs. After 24 hours, the adult mites were removed, various dilutions of an emulsion of a compound of the general formula (1) [i.e., 20% Trebon Emulsion (Compound No.2), an emulsion of Compound No.3, an emulsion of Compound No.4, or Shironen Emulsion (Compound No.5)], 1% Milbenock Emulsion or a mixture thereof were sprayed by means of a tower sprayer, and the leaf sections were maintained in a thermostatic chamber kept at 25°C. Eight days after the treatment, the numbers of surviving mites, dead mites, unhatched eggs and escaping mites were examined. Thus, the survival rates at various concentrations were calculated and the $LC_{50}$ value (in ppm) was determined therefrom.

In order to evaluate the synergistic effect of each compound of the general formula (1) and the macrolide compound, the combined toxicity index was calculated from the $LC_{50}$ values of the respective compounds in the same manner as in Test 1. The results thus obtained are shown in Table 15.

Table 15

| Compound | $LC_{50}$ value (ppm) | Combined toxicity index |
|---|---|---|
| Milbenock Emulsion | 0.15 | — |
| Compound No.2 | 375 | — |
| Compound No.3 | 519 | — |
| Compound No.4 | 94 | — |
| Compound No.5 | 1150 | — |
| Milbenock Emulsion:Compound No.2 = 1:5 | 0.41 | 219 |
| Milbenock Emulsion:Compound No.3 = 1:5 | 0.25 | 359 |
| Milbenock Emulsion:Compound No.4 = 1:5 | 0.41 | 217 |
| Milbenock Emulsion:Compound No.5 = 1:5 | 0.26 | 345 |

It is evident from the above description that, when a compound of the general formula (1) and a macrolide compound are used in combination according to the present invention, a much higher insecticidal and acaricidal activity is exhibited as compared with the cases in which each of the compounds is used alone. Moreover, the compositions of the present invention each comprising a mixture of a compound of the general formula (1) and a macrolide compound are useful because of their excellent insecticidal and acaricidal properties.

**Claims**

1. An insecticidal and acaricidal composition comprising, as active ingredients, at least one compound of the general formula (1)

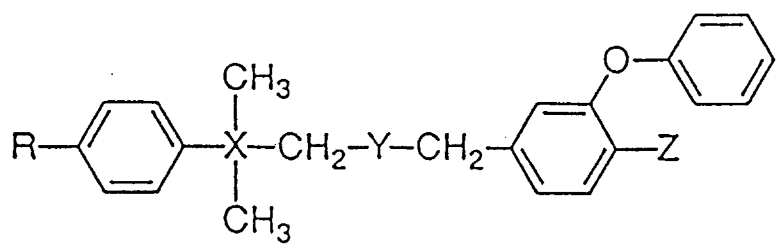

(1)

where R is a bromodifluoromethoxy or ethoxy group, X is a carbon or silicon atom, Y is an oxygen atom or $CH_2$, and Z is a hydrogen or fluorine atom, and at least one macrolide compound selected from the group consisting of a compound of the general formula (2)

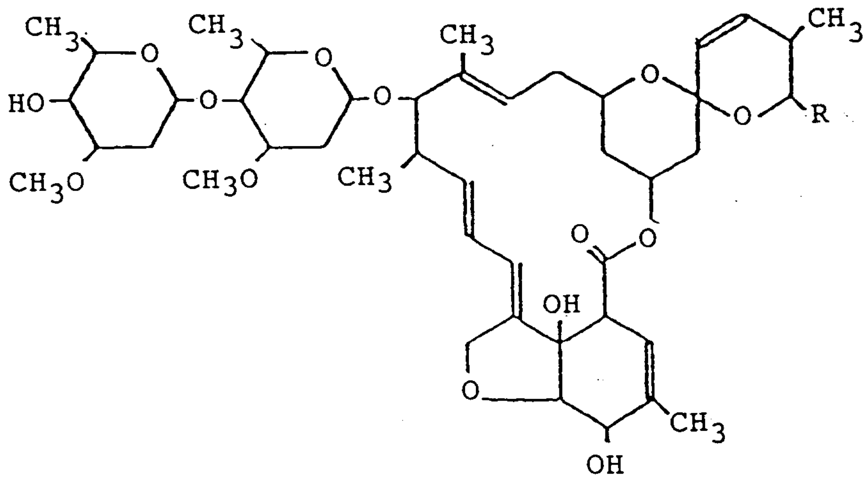

(2)

where R is sec-$C_4H_9$ or an isopropyl group, and a compound of the general formula (3)

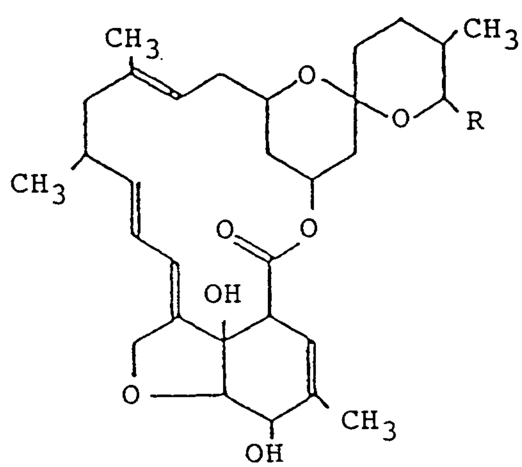

(3)

where R is a methyl or ethyl group.

2. An insecticidal and acaricidal composition as claimed in claim 1 wherein, in the compound of the general formula (1), R is a bromodifluoromethoxy group, X is a carbon atom, Y is an oxygen atom, and Z is a hydrogen atom.

3. An insecticidal and acaricidal composition as claimed in claim 1 wherein, in the compound of the general formula (1), R is an ethoxy group, X is a carbon atom, Y is an oxygen atom, and Z is a hydrogen atom.

4. An insecticidal and acaricidal composition as claimed in claim 1 wherein, in the compound of the general formula (1), R is an ethoxy group, X is a carbon atom, Y is $CH_2$, and Z is a hydrogen atom.

5. An insecticidal and acaricidal composition as claimed in claim 1 wherein, in the compound of the general formula (1), R is an ethoxy group, X is a carbon atom, Y is $CH_2$, and Z is a fluorine atom.

6. An insecticidal and acaricidal composition as claimed in claim 1 wherein, in the compound of the general formula (1), R is an ethoxy group, X is a silicon atom, Y is $CH_2$, and Z is a fluorine atom.

**7.** An insecticidal and acaricidal composition as claimed in any one of claims 1-6 wherein the macrolide compound comprises a mixture of a compound of the general formula (2) in which R is sec-$C_4H_9$ and a compound of the general formula (2) in which R is an isopropyl group.

**8.** An insecticidal and acaricidal composition as claimed in any one of claims 1-6 wherein the macrolide compound comprises a mixture of a compound of the general formula (3) in which R is a methyl group and a compound of the general formula (3) in which R is an ethyl group.

**9.** A method for controlling pests which comprises applying an insecticidal and acaricidal composition as claimed in any one of claims 1-6 to a place, agricultural product or commercial article that has been affected by pests.

**10.** A method for controlling pests which comprises applying an insecticidal and acaricidal composition as claimed in claim 7 to a place, agricultural product or commercial article that has been affected by pests.

**11.** A method for controlling pests which comprises applying an insecticidal and acaricidal composition as claimed in claim 8 to a place, agricultural product or commercial article that has been affected by pests.

European Patent Office

# EUROPEAN SEARCH REPORT

Application Number
EP 95 11 8959

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | EP-A-0 242 502 (HOECHST AG) 28 October 1987<br>* page 2, paragraph 2 *<br>* page 3, line 5 *<br>* page 5, paragraph 3 *<br>* page 10, paragraph 2 - page 11, paragraph 1 *<br>* claim 1 * | 1,3,7-11 | A01N43/90<br>//(A01N43/90, 55:10,31:14) |
| Y | | 2,4-6 | |
| Y | DE-A-37 08 231 (MITSUI TOATSU CHEMICALS) 17 September 1987<br>* page 6; table 1; comp. 1 * | 2 | |
| Y | GB-A-2 120 664 (MITSUI TOATSU CHEMICALS) 7 December 1983<br>* page 1, line 5 - line 14 *<br>* page 26, table 1, comp. 3 *<br>* page 33, table 1, comp. 24 * | 4,5 | |
| Y | EP-A-0 224 024 (HOECHST AG) 3 June 1987<br>* page 16, line 34 - line 39 *<br>* page 17, line 1 - line 2 *<br>* page 28, comp. 55 * | 6 | TECHNICAL FIELDS SEARCHED (Int.Cl.6)<br>A01N |
| Y | EP-A-0 549 441 (VIRBAC SA) 30 June 1993<br>* page 5, line 28 - page 6, line 42 * | 1-11 | |
| Y | GB-A-2 220 856 (MERCK & CO INC) 24 January 1990<br>* the whole document * | 1-11 | |
| Y | EP-A-0 311 180 (SHELL INT RESEARCH) 12 April 1989<br>* the whole document * | 1-11 | |
| Y | EP-A-0 335 225 (HOECHST AG) 4 October 1989<br>* the whole document * | 1-11 | |

The present search report has been drawn up for all claims

| Place of search | Date of completion of the search | Examiner |
|---|---|---|
| THE HAGUE | 19 March 1996 | Lamers, W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)